(19) Europäisches Patentamt / European Patent Office / Office européen des brevets

(11) **EP 4 422 058 A1**

(12) **EUROPEAN PATENT APPLICATION**
published in accordance with Art. 153(4) EPC

(43) Date of publication:
**28.08.2024 Bulletin 2024/35**

(21) Application number: **22891828.0**

(22) Date of filing: **31.10.2022**

(51) International Patent Classification (IPC):
**H02M 7/217** *(2006.01)* **H02M 3/07** *(2006.01)*
**G06K 19/07** *(2006.01)*

(52) Cooperative Patent Classification (CPC):
**G06K 19/07; H02M 1/088; H02M 3/07;**
**H02M 7/217; H02M 7/219;** Y02B 70/10

(86) International application number:
**PCT/CN2022/128547**

(87) International publication number:
**WO 2023/083032 (19.05.2023 Gazette 2023/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.11.2021 CN 202111338911**

(71) Applicant: **Huawei Technologies Co., Ltd.**
**Shenzhen, Guangdong 518129 (CN)**

(72) Inventors:
• **WU, Zihan**
**Shanghai 200433 (CN)**
• **HUANG, Jingjing**
**Shenzhen, Guangdong 518129 (CN)**
• **JIA, Jia**
**Shenzhen, Guangdong 518129 (CN)**

(74) Representative: **Grünecker Patent- und Rechtsanwälte**
**PartG mbB**
**Leopoldstraße 4**
**80802 München (DE)**

(54) **RECTIFIER CIRCUIT, APPARATUS AND METHOD**

(57) A rectification circuit, apparatus, and method are provided. The rectification circuit includes M rectification units, and M is an integer greater than or equal to 2. An $n^{th}$ rectification unit includes a first switch transistor, a second switch transistor, and a bias circuit, the first switch transistor and the second switch transistor have different turn-on conditions, and n is an integer greater than or equal to 1 and less than or equal to M. A control end of the first switch transistor in the $n^{th}$ rectification unit is driven by a first voltage generated by a bias circuit in an $(n-i)^{th}$ rectification unit, and a control end of the second switch transistor in the $n^{th}$ rectification unit is driven by a second voltage generated by a bias circuit in an $(n+j)^{th}$ rectification unit, where i is an integer greater than or equal to 0, j is an integer greater than or equal to 0, n-i is greater than 0, and n+j is less than or equal to M. The rectification circuit can effectively improve energy conversion efficiency.

FIG. 3a

**Description**

This application claims priority to Chinese Patent Application No. 202111338911.1, filed with the China National Intellectual Property Administration on November 12, 2021 and entitled "RECTIFICATION CIRCUIT, APPARATUS, AND METHOD", which is incorporated herein by reference in its entirety.

**TECHNICAL FIELD**

This application relates to the field of circuit technologies, and in particular, to a rectification circuit, apparatus, and method.

**BACKGROUND**

Sensor network nodes (wireless sensor nodes, WSNs), as a basis of a concept of an "internet of things", are widely deployed in various application scenarios in recent years.

However, when a scale and density of the sensor network nodes reach a specific level, power consumption becomes a main challenge. For example, when a topology structure of the internet is mainly "distributed", a lithium battery may be used to supply power to a flexible sensor. However, as the scale of the sensor network nodes increases, the foregoing active power supply manner may become no longer reasonable due to factors of a volume and costs. In addition, a scale and energy density of sensor network node batteries are difficult to maintain high-intensity work, and an active sensor network (such as a sensor using a battery) has a short service life and poor stability. This reduces robustness of the sensor network to a specific extent.

Therefore, how to supply power to the sensor network nodes needs to be resolved urgently.

**SUMMARY**

This application provides a rectification circuit, apparatus, and method, to effectively improve energy conversion efficiency while meeting a power supply requirement of a sensor network or even an IoT network.

According to a first aspect, an embodiment of this application provides a rectification circuit. The rectification circuit includes M rectification units, and M is an integer greater than or equal to 2. An $n^{th}$ rectification unit includes a first switch transistor, a second switch transistor, and a bias circuit, the first switch transistor and the second switch transistor have different turn-on conditions, and n is an integer greater than or equal to 1 and less than or equal to M. A control end of the first switch transistor in the $n^{th}$ rectification unit is driven by a first voltage generated by a bias circuit in an $(n-i)^{th}$ rectification unit, and a control end of the second switch transistor in the $n^{th}$ rectification unit is driven by a second voltage generated by a bias circuit in an $(n+j)^{th}$ rectification unit, where i is an integer greater than or equal to 0, j is an integer greater than or equal to 0, n-i is greater than 0, and n+j is less than or equal to M.

In a cascade topology structure shown in this embodiment of this application, the control end of the first switch transistor and the control end of the second switch transistor each are driven by a proper bias circuit. This effectively increases overdrive voltages of the first switch transistor and the second switch transistor, and changes voltages at control ends of the first switch transistor and the second switch transistor. Therefore, energy conversion efficiency can be effectively improved.

In a possible implementation, a first voltage generated by the bias circuit in the $n^{th}$ rectification unit is used to drive a control end of a first switch transistor in an $(n+i)^{th}$ rectification unit, and a second voltage generated by the bias circuit in the $n^{th}$ rectification unit is used to drive a control end of a second switch transistor in an $(n-j)^{th}$ rectification unit, where n+i is less than or equal to M, and n-j is greater than 0.

It may be understood that the rectification circuit provided in this embodiment of this application may be alternatively replaced with: The circuit includes M rectification units, where M is an integer greater than or equal to 2; an $n^{th}$ rectification unit includes a first switch transistor, a second switch transistor, and a bias circuit, where the first switch transistor and the second switch transistor have different turn-on conditions, and n is an integer greater than or equal to 1 and less than or equal to M; and a first voltage generated by the bias circuit in the $n^{th}$ rectification unit is used to drive a control end of a first switch transistor in an $(n+i)^{th}$ rectification unit, and a second voltage generated by the bias circuit in the $n^{th}$ rectification unit is used to drive a control end of a second switch transistor in an $(n-j)^{th}$ rectification unit, where n+i is less than or equal to M, and n-j is greater than 0.

In a possible implementation, a control end of the first switch transistor in the $n^{th}$ rectification unit is driven by the first voltage generated by a bias circuit in an $(n-i)^{th}$ rectification unit, and a control end of the second switch transistor in the $n^{th}$ rectification unit is driven by a second voltage generated by a bias circuit in an $(n+j)^{th}$ rectification unit, where i is an integer greater than or equal to 0, j is an integer greater than or equal to 0, n-i is greater than 0, and n+j is less than or equal to M.

In a possible implementation, the control end of the first switch transistor is configured to control on or off of the first switch transistor, and the control end of the second switch transistor is configured to control on or off of the second switch transistor.

In a possible implementation, i is equal to j, and is equal to 0.

In a possible implementation, i is not equal to 0, and j is equal to 0.

In a possible implementation, a control end of a first switch transistor in a $p^{th}$ rectification unit is driven by a first voltage generated by a bias circuit in a $1^{st}$ rectification unit, or a control end of a first switch transistor in a $p^{th}$ rectification unit is driven by a first voltage generated by a bias circuit in the $p^{th}$ rectification unit, where p is an integer greater than or equal to 1 and less than or equal to i.

In a possible implementation, i is equal to 0, and j is not equal to 0.

In a possible implementation, a control end of a second switch transistor in a $q^{th}$ rectification unit is driven by a second voltage generated by a bias circuit in an $M^{th}$ rectification unit, or a control end of a second switch transistor in a $q^{th}$ rectification unit is driven by a second voltage generated by a bias circuit in the $q^{th}$ rectification unit, where q is an integer greater than M-j and less than or equal to M.

In a possible implementation, i is not equal to 0, and j is not equal to 0.

In a possible implementation, a control end of a first switch transistor in a $p^{th}$ rectification unit is driven by a first voltage generated by a bias circuit in a $1^{st}$ rectification unit, or a control end of a first switch transistor in a $p^{th}$ rectification unit is driven by a first voltage generated by a bias circuit in the $p^{th}$ rectification unit, where p is an integer greater than or equal to 1 and less than or equal to i; and

a control end of a second switch transistor in a $q^{th}$ rectification unit is driven by a second voltage generated by a bias circuit in an $M^{th}$ rectification unit, or a control end of a second switch transistor in a $q^{th}$ rectification unit is driven by a second voltage generated by a bias circuit in the $q^{th}$ rectification unit, where q is an integer greater than M-j and less than or equal to M.

In a possible implementation, the first switch transistor includes a P-type field effect transistor, and the second switch transistor includes an N-type field effect transistor; or the first switch transistor includes an N-type field effect transistor, and the second switch transistor includes a P-type field effect transistor.

In a possible implementation, the bias circuit is configured to increase a gate voltage of the P-type field effect transistor, and/or is configured to reduce a gate voltage of the N-type field effect transistor.

According to a second aspect, an embodiment of this application provides a rectification chip. The chip includes the rectification circuit in any one of the first aspect or the possible implementations of the first aspect.

According to a third aspect, an embodiment of this application provides a rectification apparatus. The rectification apparatus includes the rectification circuit in any one of the first aspect or the possible implementations of the first aspect.

According to a fourth aspect, an embodiment of this application provides a rectification method, and the method is used in a rectification circuit. The rectification circuit includes M rectification units, and M is an integer greater than or equal to 2. An $n^{th}$ rectification unit includes a first switch transistor, a second switch transistor, and a bias circuit, the first switch transistor and the second switch transistor have different turn-on conditions, and n is an integer greater than or equal to 1 and less than or equal to M. A control end of the first switch transistor in the $n^{th}$ rectification unit is connected to a node at which a bias circuit in an $(n-i)^{th}$ rectification unit generates a first voltage, and a control end of the second switch transistor in the $n^{th}$ rectification unit is connected to a node at which a bias circuit in an $(n+j)^{th}$ rectification unit generates a second voltage, where i is an integer greater than or equal to 0, j is an integer greater than or equal to 0, n-i is greater than 0, and n+j is less than or equal to M. The method includes: When the first switch transistor in the $n^{th}$ rectification unit is turned on, the first voltage generated by the bias circuit in the $(n-i)^{th}$ rectification unit is used to decrease a gate voltage of the first switch transistor, so that a gate-source voltage of the first switch transistor in the $n^{th}$ rectification unit is decreased; and when the second switch transistor in the $n^{th}$ rectification unit is turned on, the second voltage generated by the bias circuit in the $(n+j)^{th}$ rectification unit is used to increase a gate voltage of the second switch transistor, so that a gate-source voltage of the second switch transistor in the $n^{th}$ rectification unit is increased.

In this embodiment of this application, for example, the first switch transistor may include a P-type field effect transistor, and the second switch transistor may include an N-type field effect transistor. According to the method provided in this embodiment of this application, a proper bias voltage is given to each of the first switch transistor and the second switch transistor, so that overdrive voltages of the first switch transistor and the second switch transistor can be effectively increased. In this way, forward turn-on currents of the first switch transistor and the second switch transistor are larger, a quantity of charges transported per unit time is larger, and energy conversion efficiency can be effectively improved.

According to a fifth aspect, an embodiment of this application provides a rectification method, and the method is used in a rectification circuit. The rectification circuit includes M rectification units, and M is an integer greater than or equal to 2. An $n^{th}$ rectification unit includes a first switch transistor, a second switch transistor, and a bias circuit, the first switch transistor and the second switch transistor have different turn-on conditions, and n is an integer greater than or equal to 1 and less than or equal to M. A control end of the first switch transistor in the $n^{th}$ rectification unit is connected to a node at which a bias circuit in an $(n-i)^{th}$ rectification unit generates a first voltage, and a control end of the second switch transistor in the $n^{th}$ rectification unit is connected to a node at which a bias circuit in an $(n+j)^{th}$ rectification unit generates a second voltage, where i is an integer greater than or equal to 0, j is an integer greater than or equal to 0, n-i is greater than 0, and n+j is less than or equal to M. The method includes: When the first switch transistor in the $n^{th}$ rectification unit is turned on, the first voltage generated by the bias circuit in the $(n-i)^{th}$ rectification unit is used to increase a gate voltage of the first switch transistor, so that a gate-source voltage of the first switch transistor in the $n^{th}$ rectification unit is increased; and when the second switch transistor in the $n^{th}$ rectification unit is turned on, the second voltage generated by the bias circuit in the $(n+j)^{th}$ rectification unit is used to decrease a gate voltage of the second switch transistor, so that a gate-source voltage of the second switch transistor in the $n^{th}$ rectification unit is decreased.

In this embodiment of this application, for example, the first switch transistor may include an N-type field effect transistor, and the second switch transistor may include a P-type field effect transistor. According to the method provided in this embodiment of this application, a proper bias voltage is given to each of the first switch transistor and the second switch transistor, so that overdrive voltages of the first switch transistor and the second switch transistor can be effectively increased. In this way, forward turn-on currents of the first switch transistor and the second switch transistor are larger, a quantity of charges transported per unit time is larger, and energy conversion efficiency can be effectively improved.

## BRIEF DESCRIPTION OF DRAWINGS

FIG. 1 is a schematic diagram of a structure of a rectification circuit according to an embodiment of this application;
FIG. 2a is a schematic diagram of a structure of a rectification circuit according to an embodiment of this application;
FIG. 2b is a schematic diagram of a structure of a rectification circuit according to an embodiment of this application;
FIG. 3a is a schematic diagram of a structure of a rectification circuit according to an embodiment of this application;
FIG. 3b is a schematic diagram of a structure of another rectification circuit according to an embodiment of this application;
FIG. 3c is a schematic diagram of a structure of still another rectification circuit according to an embodiment of this application;
FIG. 4a to FIG. 4d each are a schematic diagram of a structure of a rectification circuit corresponding to a case in which i is equal to 0 and j is equal to 0 according to an embodiment of this application;
FIG. 5a to FIG. 5c each are a schematic diagram of a structure of a rectification circuit corresponding to a case in which i is not equal to 0 and j is equal to 0 according to an embodiment of this application;
FIG. 6a to FIG. 6c each are a schematic diagram of a structure of a rectification circuit corresponding to a case in which i is equal to 0 and j is not equal to 0 according to an embodiment of this application;
FIG. 7a to FIG. 7b each are a schematic diagram of a structure of a rectification circuit corresponding to a case in which i is not equal to 0 and j is not equal to 0 according to an embodiment of this application; and
FIG. 8 is a schematic diagram of a structure of a rectification apparatus according to an embodiment of this application.

## DESCRIPTION OF EMBODIMENTS

To make the objectives, technical solutions, and advantages of this application clearer, the following further describes this application with reference to the accompanying drawings.

The terms "first", "second", and the like in the specification, claims, and accompanying drawings of this application are merely used to distinguish between different objects, but are not used to describe a specific order. In addition, the terms "include" and "have" and any other variations thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in the specification indicates that a particular characteristic, structure, or feature described with reference to this embodiment may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described herein may be combined with other embodiments.

In this application, "at least one piece (item)" means one or more, "a plurality of" means two or more, "at least two pieces (items)" means two or three or more, and "and/or" is used to describe an association relationship between associated objects, and indicates that three relationships may exist. For example, "A and/or B" may indicate: only A exists, only B exists, and both A and B exist, where A and B may be singular or plural. The character "/" usually indicates an "or" relationship between the associated objects. "At least one of the following items (pieces)" or a similar expression thereof means any combination of these items. For example, at least one item (piece) of a, b, or c may represent: a, b, c, "a and b", "a and c", "b and c", or "a, b, and c".

The following describes terms used in this application.

Rectification circuit: A rectification circuit may also be referred to as a rectification circuit that can harvest energy (or a rectification circuit having an energy harvesting function), and is a circuit that absorbs discrete energy (which may also be referred to as an energy source) from the outside, and converts the energy into continuous direct current energy (which may also be referred to as a direct current energy source) for use by a downstream load. In other words, the rectification circuit having the energy harvesting function can convert discrete energy in a surrounding environment into a direct current for use by a downstream circuit. For example, the rectification circuit having the energy harvesting function may absorb discrete radio frequency energy (which may also referred to as radio-frequency energy, a radio frequency energy source, or the like) from the outside, and convert the discrete radio frequency energy into continuous direct current energy for the downstream load. That is, a core function of a radio frequency rectification apparatus is to convert a discrete electromagnetic wave with low energy density in the environment into a direct current with high energy density for output. It may be understood that the rectification circuit having the energy harvesting function shown in this application may also be referred to as a rectification circuit having an energy obtaining function, and a name of the rectification circuit is not limited in this application.

Energy conversion efficiency: Energy conversion efficiency is a ratio of power input to a rectification circuit with an energy harvesting function to output direct current power.

Sensitivity: As input power decreases, a voltage amplitude of an input signal decreases. When the input power is less than a specific value, switch transistors in a main path of a rectifier are in a subthreshold or cut-off state, energy conversion efficiency of the rectifier greatly decreases, and an output voltage also decreases and fails to maintain normal operation of a downstream circuit. Minimum input power that can ensure normal operation of the downstream circuit may be referred to as sensitivity (sensitivity).

First switch transistor and second switch transistor: A first switch transistor and a second switch transistor are switch transistors with different turn-on conditions, different cut-off conditions, different driving conditions, or the like. Both the first switch transistor and the second switch transistor may be rectifier switch transistors. For example, the turn-on conditions may include: Voltage conditions that enable the first switch transistor and the second switch transistor to be turned on are different. For example, the first switch transistor and the second switch transistor may be field effect transistors (field effect transistor, FET), such as metal-oxide-semiconductor field effect transistors (metal-oxide-semiconductor field-effect transistor, MOSFET) (MOS transistor for short). For example, switch transistors in a rectifier generally appear in pairs. For example, each pair may include a P-type MOS transistor (PMOS transistor for short) and an N-type MOS transistor (NMOS transistor for short) (which may also be referred to as each pair of PMOS transistor and NMOS transistor that are used simultaneously). For example, the first switch transistor is a PMOS transistor, and the second switch transistor is an NMOS transistor. For another example, the first switch transistor is an NMOS transistor, and the second switch transistor is a PMOS transistor. For example, an NMOS transistor can be turned on only when a gate-source voltage (for example, Vgs) of the NMOS transistor is greater than a specific value. For another example, a PMOS transistor can be turned on only when a gate-source voltage of the PMOS transistor is less than a specific value. Because gate-source voltages of the NMOS transistor and the PMOS transistor are different, it may be referred to as different turn-on conditions of the NMOS transistor and the PMOS transistor. Similarly, for descriptions of different cut-off conditions, refer to descriptions of different turn-on conditions. The NMOS transistor can be turned on when Vgs is greater than a specific value. This may be understood that the NMOS transistor is suitable for a case in which a source is grounded, that is, it may be understood that the NMOS transistor is a low-end driver. The PMOS transistor can be turned on when Vgs is less than a specific value. This may be understood that the PMOS transistor is suitable for a case in which a source is connected to a power supply voltage (volt current condense, VCC), that is, it may be understood that the PMOS transistor is a high-end driver. This indicates that driving conditions of the NMOS transistor and the PMOS transistor are different.

Many energy sources, such as thermal energy, solar energy, mechanical energy, and radio frequency (radio frequency, RF) energy, have been proven to be feasible for a rectification circuit for energy harvesting. Different energy often has different energy density and use conditions. Therefore, different energy may be used in different scenarios. Compared with other energy, although power density of radio frequency energy scattered by electromagnetic waves is small, a collection environment of the radio frequency energy is easy to implement. For example, the mechanical energy requires sensors to maintain vibration, and the solar energy can only be obtained during the day. However, due to strong penetration of the electromagnetic waves, collection of the radio frequency energy is almost unaffected by a surrounding environment. Further, in a communication revolution in recent decades, a large quantity of high-density radio frequency communication networks have been established. Therefore, radio frequency energy exists widely in the environment and can be widely collected and utilized.

In view of this, this application provides a rectification circuit, apparatus, and method. Discrete radio frequency energy from the outside is collected and converted into continuous direct current energy for use by a downstream load. In addition, the rectification circuit provided in this application can further effectively improve energy conversion efficiency.

The following describes the rectification circuit in this application.

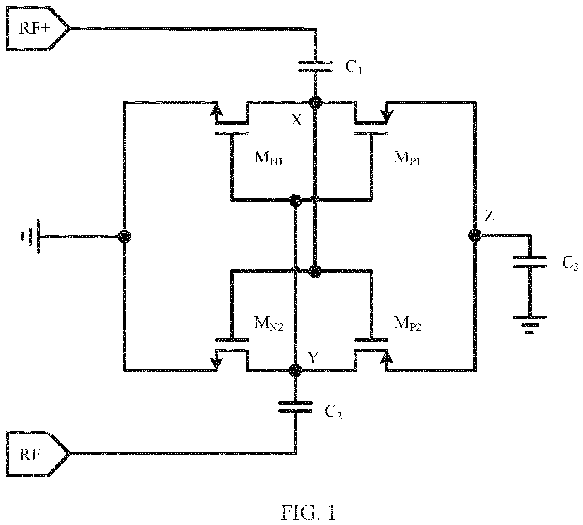

FIG. 1 is a schematic diagram of a structure of a rectification circuit according to an embodiment of this application. As shown in FIG. 1, $C_1$, $C_2$, and $C_3$ are capacitors, $M_{N1}$ and $M_{N2}$ are NMOS transistors, $M_{P1}$ and $M_{P2}$ are PMOS transistors, and RF+ and RF- are differential signals with a same amplitude and opposite phases (for example, a phase difference is 180 degrees). It may be understood that RF+ and RF- shown in FIG. 1 are a differential signal pair obtained by converting radio frequency signals by using an antenna and/or a balun. Because the rectification circuit shown in FIG. 1 can convert a radio frequency signal into direct current energy, the rectification circuit shown in FIG. 1 may also be used as a rectifier. Therefore, the rectification circuit shown in FIG. 1 may also be referred to as a cross-couple rectifier (cross-couple rectifier, CCR).

For example, when RF+ is greater than 0, based on turn-on characteristics of an NMOS transistor and a PMOS transistor (for example, the NMOS transistor is turned on when Vgs of the NMOS transistor is greater than a specific value, and the PMOS transistor is turned on when Vgs of the PMOS transistor is less than a specific value), $M_{N2}$ is in a turn-on state, $M_{P2}$ is in a cut-off state, $M_{P1}$ is in a turn-on state, and $M_{N1}$ is in a cut-off state. When $M_{P1}$ is in the turn-on state, $C_1$ discharges to $C_3$, and when $M_{N2}$ is in the turn-on state, a leftmost ground pin transfers charges (that is, charging) to $C_2$ through a node Y

Similarly, when RF- is greater than 0, based on the turn-on characteristics of the NMOS transistor and the PMOS transistor, $M_{N2}$ is in a cut-off state, $M_{P2}$ is in a turn-on state, $M_{P1}$ is in a cut-off state, and $M_{N1}$ is in a turn-on state. When $M_{P2}$ is in the turn-on state, $C_2$ discharges to $C_3$, and when $M_{N1}$ is in the turn-on state, the leftmost ground pin transfers charges (that is, charging) to $C_1$ through a node X.

It can be learned from the foregoing description that the rectification circuit shown in FIG. 1 is fully symmetrical (fully symmetrical) with four transistors. Therefore, without losing generality, a working principle of the CCR can be clarified by analyzing a working principle of $M_{P1}$.

Because the node X is connected to RF+ through the coupling capacitor $C_1$, an alternating current component of Vx is RF+. Because the node Y is connected to RF- through the coupling capacitor $C_2$, an alternating current component of $V_Y$ is RF-. Vx represents a voltage of the node X, and $V_Y$ represents a voltage of the node Y

When $M_{P1}$ is forwardly turned on, a source end and a drain end are interchanged, and an overdrive voltage satisfies a formula (1):

$$V_{OV} = V_{RF+} - V_{RF-} - \left| V_{THp} \right| = 2\left| V_{RF+} \right| - \left| V_{THp} \right| \quad (1).$$

Vov represents the overdrive voltage of $M_{P1}$, and $V_{THp}$ represents a threshold voltage of the PMOS transistor.

In this case, $M_{P1}$ is in a deep linear region, and an on-resistance of $M_{P1}$ satisfies a formula (2):

$$r_{MP1} = \cfrac{1}{\cfrac{1}{2}\mu_p C_{OX} \cfrac{W}{L}\left(V_{OV}\right)^2 \lambda} \quad (2).$$

$r_{MP1}$ represents the on-resistance of $M_{P1}$, $\mu_p$ represents carrier mobility, $C_{ox}$ represents a unit capacitance of the PMOS transistor, W/L represents an aspect ratio of the PMOS transistor, Vov represents the overdrive voltage of $M_{P1}$, and $\lambda$ represents a channel modulation coefficient.

When $M_{P1}$ is turned on, a gate end-to-source end voltage of $M_{P1}$ is higher than that of another static bias rectifier (for example, a Dickson rectifier), and the on-resistance of $M_{P1}$ is lower than that of the another static bias rectifier. Therefore, $M_{P1}$ transfers a larger quantity of charges when $M_{P1}$ is turned on. When $M_{P1}$ is in a cut-off state, a gate end-to-source end voltage Vgs of $M_{P1}$ satisfies a formula (3):

$$Vgs = V_{RF+} - V_{RF-} = -2\left| V_{RF+} \right| \quad (3).$$

When $M_{P1}$ is in the cut-off state, a gate end-to-source end voltage difference is negative, and is smaller than that of another static bias rectifier, and a small negative threshold voltage suppresses a quantity of reverse leakage charges. Therefore, the rectification circuit shown in FIG. 1 further suppresses a reverse leakage current while increasing a forward turn-on current. Due to an increase of an output current, more charges are output to the load capacitor $C_3$. Therefore, more energy is output. In addition, input power remains unchanged. Therefore, energy conversion efficiency is improved. It may be understood that in this application, a gate end may also be referred to as a gate, a source end may also be referred to as a source, and a drain end may also be referred to as a drain.

$M_{P1}$ is still used as an example for analysis.

In a steady state, influence of non-ideal factors is ignored, and it is assumed that an output voltage of $M_{P1}$ remains at a fixed value Vo (such as a voltage of a node Z), and voltages of the node X and the node Y are Vo/2. The voltage Vx of the node X, the voltage $V_Y$ of the node Y, and Vgs and Vsd of $M_{P1}$ are obtained by adding an alternating current component provided by a differential input pair RF+/RF- to direct current components of the node X and the node Y Vx, $V_Y$, Vgs, and Vsd are shown in a formula (4) to a formula (7) respectively:

$$V_X = \frac{V_o}{2} + V_{RF} \sin(\omega t) \quad (4).$$

$$V_Y = \frac{V_o}{2} - V_{RF} \sin(\omega t) \quad (5).$$

$$V\text{gs} = \frac{V_o}{2} + V_{RF} \sin(\omega t) \quad (6).$$

$$V\text{sd} = \frac{V_o}{2} - V_{RF} \sin(\omega t) \quad (7).$$

A quantity of charges transferred by $M_{P1}$ to an output load in a charge/discharge cycle satisfies the following formula (8):

$$Q_{MP1} = \int_{t0}^{t10} I_{MP1} dt \quad (8).$$

t0 to 110 represent the charging/discharging cycle, and $I_{MP1}$ represents a current of $M_{P1}$.

When $I_{MP1}$ is greater than 0, $M_{P1}$ charges a downstream load. When $I_{MP1}$ is less than 0, the downstream load capacitor reversely leaks charges. Therefore, a quantity of transferred charges satisfies the following formula (9):

$$Q_{MP1} = Q_{\text{charge}} + Q_{leakage} \quad (9).$$

$Q_{\text{charge}}$ represents a quantity of charges transferred when $M_{P1}$ charges the downstream load, and $Q_{leakage}$ represents a quantity of charges reversely leaked by a downstream load capacitor. In other words, a quantity of transferred charges is accumulation of forward and reverse charges in one cycle.

However, the rectification circuit shown in FIG. 1 has poor energy conversion efficiency and low sensitivity performance in extreme environments (when input power is excessively small).

The cross-couple rectifier implements a higher gate-source voltage by dynamically adjusting a gate voltage and a source voltage of the rectifier, thereby implementing higher energy conversion efficiency. However, energy conversion efficiency of the cross-couple rectifier may be further improved. For example, in the cross-couple rectifier, pulling-up of a gate-source voltage Vgs is mainly implemented by subtraction of differential signals, and direct current voltages of a gate and a source of the cross-couple rectifier are fixed at Vo/2. It is assumed that a proper direct current bias is given to a gate of a MOS transistor in a main path of the rectifier, so that an overdrive voltage of the MOS transistor in the main path of the rectifier becomes larger, a voltage difference between a source end and a drain end of the MOS transistor in the main path of the rectifier becomes larger, and the rectifier can transfer more charges to a downstream load when the source end and the drain end are interchanged.

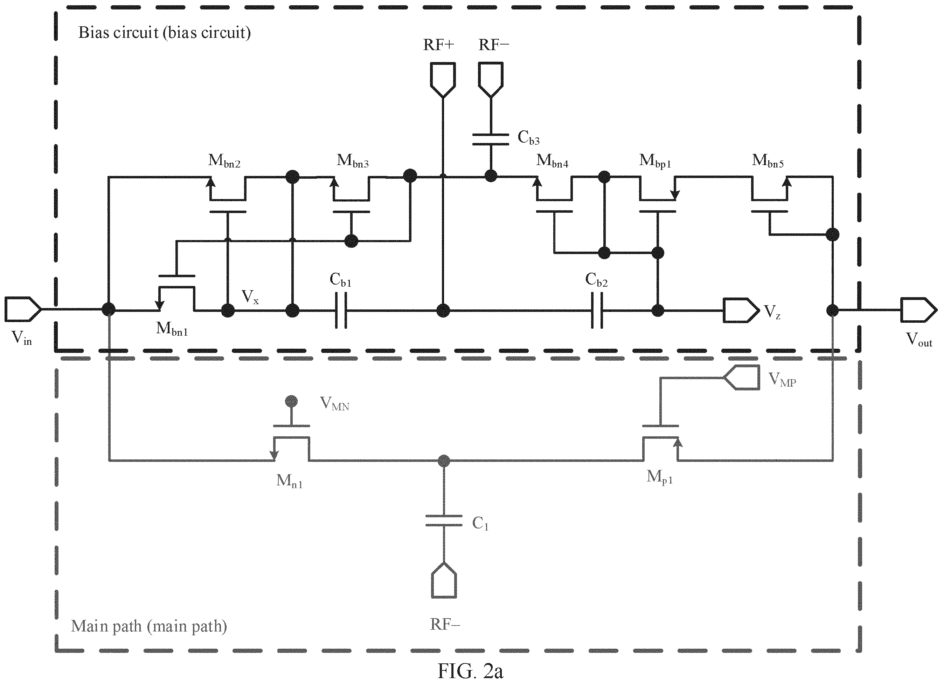

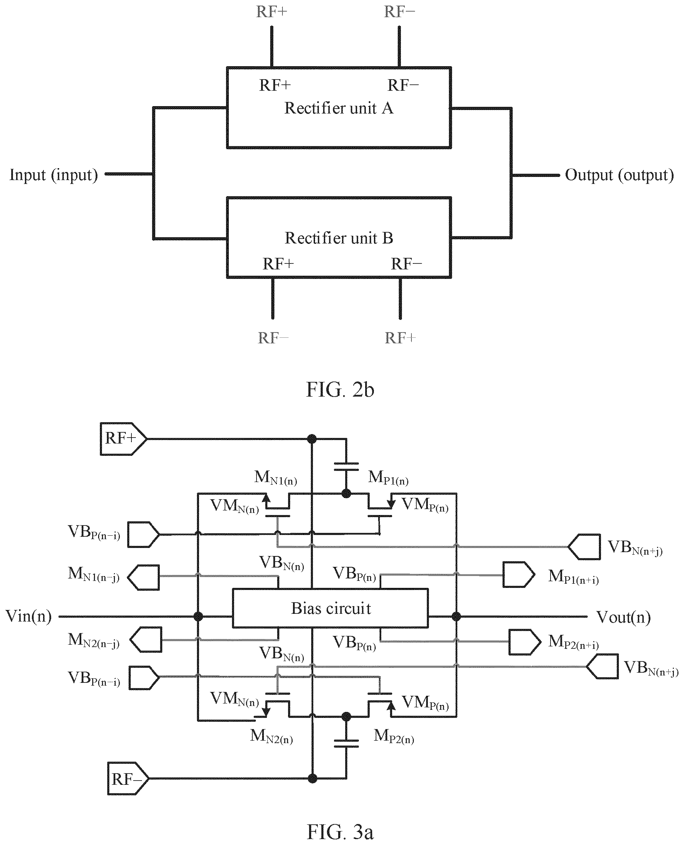

FIG. 2a and FIG. 2b each are a schematic diagram of a structure of a rectification circuit according to an embodiment of this application. The rectification circuit may be understood as a rectification circuit to which a direct current bias module is added based on a circuit shown in FIG. 1. It may be understood that a circuit shown in FIG. 2a may be understood as a rectification unit A or a rectification unit B in a rectification circuit shown in FIG. 2b. Therefore, after a bias circuit module is deployed, an output current of a MOS in a main path of the rectifier may change greatly. Compared with the circuit shown in FIG. 1, although time of exchanging a source end and a drain end of the rectifier does not change, Vgs of the rectifier in FIG. 2a is larger than that of the rectifier in the circuit shown in FIG. 1 during exchanging of the source end and the drain end of the rectifier. Therefore, a forward turn-on current of the MOS transistor in the main path of the rectifier is larger, and a quantity of charges transferred per unit time is larger. However, the direct current bias module allows the rectifier to have a larger reverse leakage current when the source end and the drain end are not interchanged. That is, compared with a CCR, the circuit shown in FIG. 2a can further increase a gate voltage of a rectifier switch transistor, and increasing a voltage indicates that a current is further increased. Therefore, a forward input current is larger, and a leakage current is also larger.

However, in the circuit shown in FIG. 2a, a structure for supplying a bias voltage to an NMOS transistor in the main path of the rectifier and a structure for supplying a bias voltage to a PMOS transistor in the main path of the rectifier are not symmetrical. Therefore, for a rectifier unit, impedances input from two ends of RF+ and RF- are not equal. Asymmetry of amplitudes of input radio frequency signals causes a mismatch of current drive capabilities of two MOS transistors (such as an NMOS transistor and a PMOS transistor) in the main path of the rectifier. As a result, energy conversion efficiency of the rectifier is reduced.

FIG. 3a is a schematic diagram of a structure of a rectification circuit according to an embodiment of this application. The rectification circuit can be further used to improve energy conversion efficiency, and may be used in any scenario of radio frequency energy harvesting. For example, the rectification circuit shown in this embodiment of this application may be used in a chip such as an ID card, a membership card, electronic toll collection (electronic toll collection, ETC), a bus card, or an access control card. Alternatively, the rectification circuit may be used in an internet of things sensor, such as a temperature sensor, a humidity sensor, or a medical sensor. Examples are not enumerated herein.

It may be understood that FIG. 3a is a schematic diagram of a structure of an $n^{th}$ rectification unit in the rectification circuit. n is an integer greater than or equal to 1, n is less than or equal to M, M is a quantity of rectification units included in the rectification circuit, and M is an integer greater than or equal to 2.

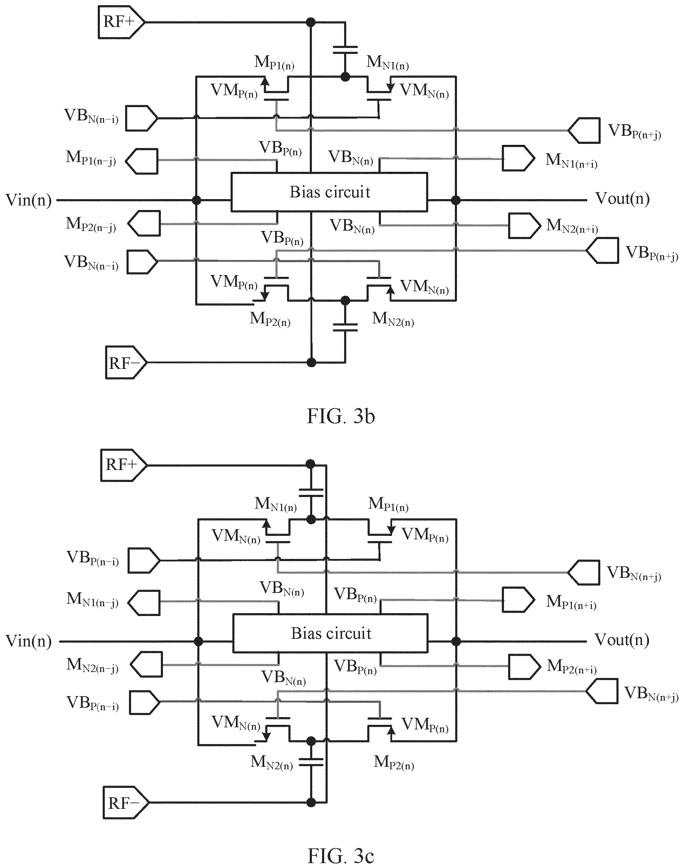

The $n^{th}$ rectification unit includes two types of switch transistors, for example, includes a first switch transistor and a second switch transistor. For example, the first switch transistor may be a PMOS transistor, such as $M_{P1(n)}$ and $M_{P2(n)}$ shown in FIG. 3a, and the second switch transistor may be an NMOS transistor, such as $M_{N1(n)}$ and $M_{N2(n)}$ shown in FIG. 3a. For example, the first switch transistor may be an NMOS transistor, and the second switch transistor may be a PMOS transistor. In other words, FIG. 3a is only one case shown in this embodiment of this application. As shown in FIG. 3b, positions of a PMOS transistor and an NMOS transistor shown in FIG. 3a may also be interchanged. For ease of description, the following uses FIG. 3a as an example to describe the rectification circuit provided in this embodiment of this application. For a specific description of a circuit shown in FIG. 3b, refer to the description of FIG. 3a. FIG. 3c is another deformed structure of FIG. 3a. For a specific description of a circuit shown in FIG. 3c, refer to the description of FIG. 3a.

The $n^{th}$ rectification unit further includes a bias circuit. The bias circuit may generate two types of voltages, for example, include a first voltage and a second voltage. The first voltage may be $VB_{P(n)}$ shown in FIG. 3a, and the second voltage may be $VB_{N(n)}$ shown in FIG. 3a.

The first voltage generated by the bias circuit in the $n^{th}$ rectification unit is used to drive a control end of a first switch transistor in an $(n+i)^{th}$ rectification unit. It may also be understood that a node (namely, a node corresponding to the first voltage) at which the bias circuit in the $n^{th}$ rectification unit generates the first voltage is connected to the control end of the first switch transistor in the $(n+i)^{th}$ rectification unit. The second voltage generated by the bias circuit in the $n^{th}$ rectification unit is used to drive a control end of a second switch transistor in an $(n-j)^{th}$ rectification unit. It may also be understood that a node (namely, a node corresponding to the second voltage) at which the bias circuit in the $n^{th}$ rectification unit generates the second voltage is connected to the control end of the second switch transistor in the $(n-j)^{th}$ rectification unit. Similarly, a control end of a first switch transistor in the $n^{th}$ rectification unit is driven by a first voltage generated by a bias circuit in an $(n-i)^{th}$ rectification unit. It may also be understood that the control end of the first switch transistor in the $n^{th}$ rectification unit is connected to a node at which the bias circuit in the $(n-i)^{th}$ rectification unit generates the first voltage. A control end of a second switch transistor in the $n^{th}$ rectification unit is driven by a second voltage generated by a bias circuit in an $(n+j)^{th}$ rectification unit. It may also be understood that the control end of the second switch transistor in the $n^{th}$ rectification unit is connected to a node at which the bias circuit in the $(n+j)^{th}$ rectification unit generates the second voltage.

i is an integer greater than or equal to 0, j is an integer greater than or equal to 0, n+i is less than or equal to M, n+j is less than or equal to M, n-i is greater than or equal to 1 (that is, n-i is greater than 0), and n-j is greater than or equal to 1 (that is, n-j is greater than 0). It may be understood that a first sequence of rectification units shown in this embodiment of this application starts from 1. When the first sequence of the rectification units starts from another value, ranges of n, n-i, and n-j may change accordingly. For example, when the first sequence of the rectification units starts from 0, n is an integer greater than or equal to 0, n-i is greater than or equal to 0, and n-j is greater than or equal to 0.

A control end of a first switch transistor is configured to control on or off of the first switch transistor, and a control end of a second switch transistor is configured to control on or off of the second switch transistor. A MOS transistor

is used as an example. A control end of the MOS transistor is a gate.

It may be understood that a quantity of first switch transistors and a quantity of second switch transistors are not limited in embodiments of this application. For example, one rectification unit may include two first switch transistors and two second switch transistors. For another example, one rectification unit may further include three first switch transistors and three second switch transistors. For another example, one rectification unit may further include four first switch transistors, four second switch transistors, and the like. Examples are not enumerated herein. For ease of description, the following describes the rectification circuit shown in this embodiment of this application by using an example in which one rectification unit includes two first switch transistors and two second switch transistors.

For example, as shown in FIG. 3a, a gate of $M_{P1(n)}$ in the $n^{th}$ rectification unit is driven by one $VB_{P(n-i)}$ generated by the bias circuit in the $(n-i)^{th}$ rectification unit, and a gate of $M_{P2(n)}$ in the $n^{th}$ rectification unit is driven by another $VB_{P(n-1)}$ generated by the bias circuit in the $(n-i)^{th}$ rectification unit. A gate of $M_{N1(n)}$ in the $n^{th}$ rectification unit is driven by one $VB_{N(n+j)}$ generated by the bias circuit in the $(n+j)^{th}$ rectification unit, and a gate of $M_{N2(n)}$ in the $n^{th}$ rectification unit is driven by another $VB_{N(n+j)}$ generated by the bias circuit in the $(n+j)^{th}$ rectification unit. It may be understood that $VB_{P(n-1)}$ may be understood as the first voltage, and $VB_{N(n+j)}$ may be understood as the second voltage.

Similarly, one $VB_{P(n)}$ generated by the bias circuit in the $n^{th}$ rectification unit is used to drive $M_{P1(n+i)}$ in the $(n+i)^{th}$ rectification unit, and another $VB_{P(n)}$ generated by the bias circuit in the $n^{th}$ rectification unit is used to drive $M_{P2(n+i)}$ in the $(n+i)^{th}$ rectification unit. One $VB_{N(n)}$ generated by the bias circuit in the $n^{th}$ rectification unit is used to drive $M_{N1(n-j)}$ in the $(n-j)^{th}$ rectification unit, and another $VB_{N(n)}$ generated by the bias circuit in the $n^{th}$ rectification unit is used to drive $M_{N2(n-j)}$ in the $(n-j)^{th}$ rectification unit.

It may be understood that meanings of letters shown in FIG. 3a may be shown as follows.

In $M_{P1(n)}$, "M" indicates a MOS transistor, "P" indicates a PMOS transistor, "1" indicates one PMOS transistor (for example, a $1^{st}$ PMOS transistor) in the $n^{th}$ rectification unit, and "n" indicates a sequence of rectification units, for example, the $n^{th}$ rectification unit. In $M_{P2(n)}$, "2" indicates another PMOS transistor (for example, a $2^{nd}$ PMOS transistor) in the $n^{th}$ rectification unit. "N" in $M_{N1(n)}$ and "N" in $M_{N2(n)}$ indicate an NMOS transistor. $VM_{P(n)}$ indicates a voltage of a PMOS transistor in the $n^{th}$ rectification unit, and $VM_{N(n)}$ indicates a voltage of an NMOS transistor in the $n^{th}$ rectification unit. In $VB_{N(n)}$, "V" indicates a voltage, "B" indicates a bias circuit (bias circuit), "N" indicates that the voltage is connected to a gate of an NMOS transistor, and "n" indicates a sequence of rectification units, for example, the $n^{th}$ rectification unit. For meanings of other letters, refer to descriptions of $M_{P1(n)}$ and $M_{P2(n)}$. Details are not described herein again.

In this embodiment of this application, for specific implementations of parameters such as i and j, refer to the first implementation to the fourth implementation shown below.

It may be understood that FIG. 3a shows only one rectification unit as an example. When two rectification units are included, an output end (for example, Vout(n) shown in FIG. 3a) of a rectification unit may be connected to an input end (for example, Vin(n) shown in FIG. 3a) of a latter rectification unit, an input end of the rectification unit may be grounded (only for example), and an output end of the latter rectification unit may be connected to a load circuit or the like. It may be understood that a specific form of the load circuit is not limited in this embodiment of this application. When more than two rectification units are included, an input end of one rectification unit may be connected to an output end of a previous adjacent rectification unit, and an output end of the rectification unit may be connected to an input end of a next adjacent rectification unit. For example, an output end of the $n^{th}$ rectification unit may be connected to an input end of an $(n+1)^{th}$ rectification unit. For example, when more than two rectification units are included, an input end of a $1^{st}$ rectification unit may be grounded, and an output end of a last rectification unit may be connected to a load circuit.

It may be understood that the rectification circuit provided in this embodiment of this application may also be referred to as an isolated (or bias-rectifier) rectifier circuit. The isolated rectifier circuit is a rectifier circuit capable of implementing self-voltage bias, and may include a plurality of cascaded rectification units. The rectification units in the rectification circuit shown in FIG. 3a may also be understood as including two modules, for example, the two modules are a self-bias voltage generating module (as corresponding to the bias circuit shown in FIG. 3a, which may also be referred to as a self-bias rectifier module) and a rectification module (as corresponding to the MOS transistor shown in FIG. 3a). It may be understood that the rectification unit shown in this embodiment of this application may also be referred to as a rectifier.

In a cascade topology structure shown in this embodiment of this application, the control end of the first switch transistor and the control end of the second switch transistor each are driven by a proper bias circuit. This effectively increases overdrive voltages of the first switch transistor and the second switch transistor, reduces a voltage at the control end of the first switch transistor, and increases a voltage at the control end of the second switch transistor. Therefore, energy conversion efficiency can be effectively improved. In addition, the cascade topology structure of the rectification circuit provided in this embodiment of this application can use, in a low power case, a difference in direct current potentials between different rectification units, to further increase a gate voltage of an NMOS transistor in the main path and reduce a gate voltage of a PMOS transistor in the main path without consuming additional power consumption. Therefore, energy conversion efficiency can be effectively improved. In other words, the cascade topology structure of the rectification circuit provided in this embodiment of this application may additionally enhance a conduction capability of the rectifier in a low input power case (that is, increasing a gate-source voltage of the rectifier by using the bias circuit) and improve sensitivity of the rectifier in the low input power case. In addition, the gate-source voltage of the rectifier is changed by using the bias circuit, and energy conversion efficiency is also improved.

With reference to the rectification circuit shown in FIG. 3a, embodiments of this application further provide the following several implementations.

First implementation: i is equal to j, and is equal to 0.

When i is equal to j, and is equal to 0, the first voltage generated by the bias circuit in the rectification unit is used to drive the control end of the first switch transistor in the rectification unit, and the second voltage generated by the bias circuit in the rectification unit is used to drive the control end of the second switch transistor in the rectification unit.

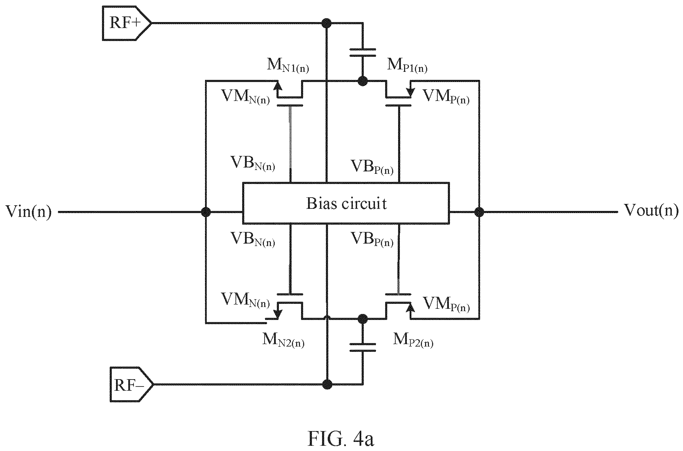

For example, FIG. 4a is a schematic diagram of a structure of a rectification circuit according to an embodiment of this application. As shown in FIG. 4a, when i is equal to j, and is equal to 0, it indicates that a gate of $M_{P1(n)}$ in the $n^{th}$ rectification unit is driven by one $VB_{P(n)}$ generated by the bias circuit in the $n^{th}$ rectification unit, and a gate of $M_{P2(n)}$ in the $n^{th}$ rectification unit is driven by another $VB_{P(n)}$ generated by the bias circuit in the $n^{th}$ rectification unit. A gate of $M_{N1(n)}$ in the $n^{th}$ rectification unit is driven by one $VB_{N(n)}$ generated by the bias circuit in the $n^{th}$ rectification unit, and a gate of $M_{N2(n)}$ in the $n^{th}$ rectification unit is driven by another $VB_{N(n)}$ generated by the bias circuit in the $n^{th}$ rectification unit. That is, a node at which the bias circuit in the $n^{th}$ rectification unit generates the bias voltage $VB_{P(n)}$ may be directly connected to a gate of a PMOS transistor in a main path of a rectifier in the $n^{th}$ rectification unit, and a node at which the bias circuit in the $n^{th}$ rectification unit generates the bias voltage $VB_{N(n)}$ may be directly connected to a gate of an NMOS transistor in the main path of the rectifier in the $n^{th}$ rectification unit.

For example, an output end of the $n^{th}$ rectification unit may be connected to an input end of an $(n+1)^{th}$ rectification unit. Vout(n) shown in FIG. 4a may be connected to Vin(n+1) of the $(n+1)^{th}$ rectification unit.

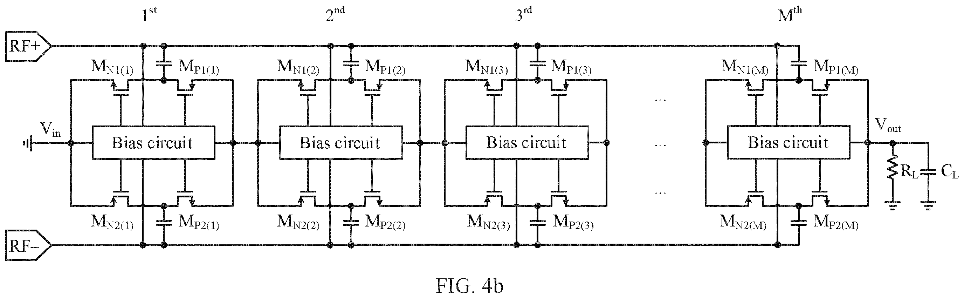

FIG. 4b is a schematic diagram of a structure of another rectification circuit according to an embodiment of this application. The rectification circuit may also be understood as a multi-module collaborative rectifier circuit, a rectification circuit in a direct connection mode, or the like. A specific name of the rectification circuit is not limited in this embodiment of this application.

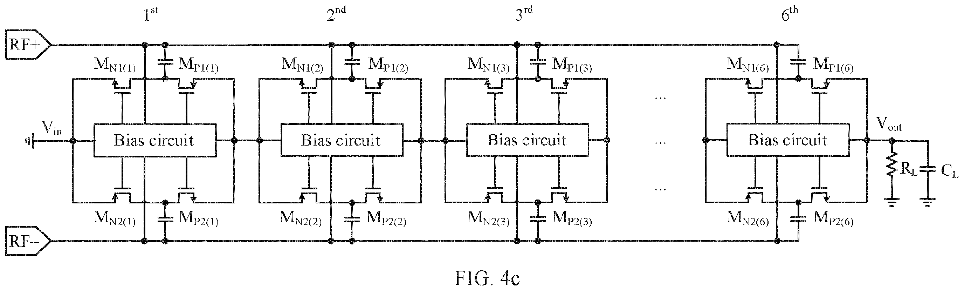

In this embodiment of this application, M may be equal to 2, 3, 4, 5, 6, 7, 8, or the like. Examples are not enumerated herein again. For example, M is equal to 6. FIG. 4c is a schematic diagram of a structure of still another rectification circuit according to an embodiment of this application. For specific descriptions of rectification circuits shown in FIG. 4a to FIG. 4c, refer to FIG. 3 a.

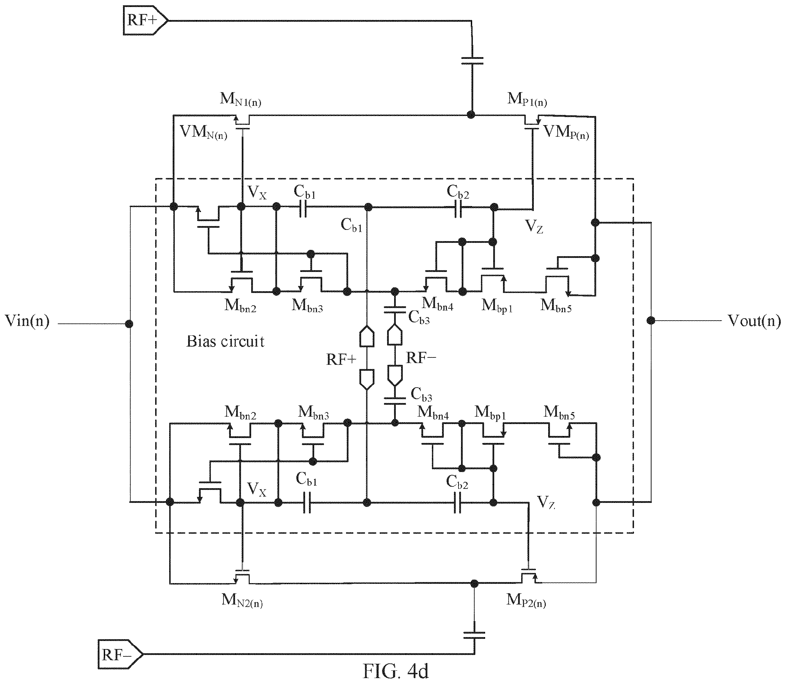

It may be understood that a bias circuit shown in this embodiment of this application may be configured to: increase a gate voltage of an NMOS transistor, and/or decrease a gate voltage of a PMOS transistor. For example, FIG. 4d is a schematic diagram of a structure of still another rectification circuit according to an embodiment of this application. It may be understood that a difference between FIG. 4d and FIG. 4a lies in that FIG. 4d shows a main structure of the bias circuit shown in FIG. 4a. As shown in FIG. 4d, $VB_{N(n)}$ shown in FIG. 4a (which may be understood as a second voltage) is a voltage at a node X shown in FIG. 4d, and $VB_{P(n)}$ shown in FIG. 4a (which may be understood as a first voltage) is a voltage at a node Z shown in FIG. 4d. It may be understood that, for a manner of generating the first voltage and the second voltage in the second implementation to the fourth implementation, refer to FIG. 4d, FIG. 2a, or the like. Details are not described in the following. The structure of the bias circuit shown herein is merely an example, and any structure that can increase a gate voltage of a MOS transistor falls within the protection scope of this application.

Gate voltages of MOS transistors such as $M_{N1(n)}$, $M_{N2(n)}$, $M_{P1(n)}$, and $M_{P2(n)}$ in the $n^{th}$ rectification unit shown in FIG. 4a are all driven (also referred to as offered) by a bias circuit in a same rectification unit (namely, the $n^{th}$ rectification unit). Therefore, a bias voltage quantity in the $n^{th}$ rectification unit satisfies the following formula (10) and formula (11):

$$VB_{N(n)} = V_{X(n)} \quad (10).$$

$$VB_{P(n)} = V_{Z(n)} \quad (11).$$

For example, the rectification circuits shown in FIG. 4a to FIG. 4c may have high energy conversion efficiency in a range of input power -11 dBm to -8 dBm.

Second implementation: i is not equal to 0, and j is equal to 0.

When i is not equal to 0, and j is equal to 0, the first voltage generated by the bias circuit in the $n^{th}$ rectification unit is used to drive a control end of a first switch transistor in an $(n+i)^{th}$ rectification unit, and the second voltage generated by the bias circuit in the $n^{th}$ rectification unit is used to drive a control end of a second switch transistor in the $(n+i)^{th}$ rectification unit. Similarly, a control end of a first switch transistor in the $n^{th}$ rectification unit is driven by a first voltage generated by a bias circuit in an $(n-i)^{th}$ rectification unit.

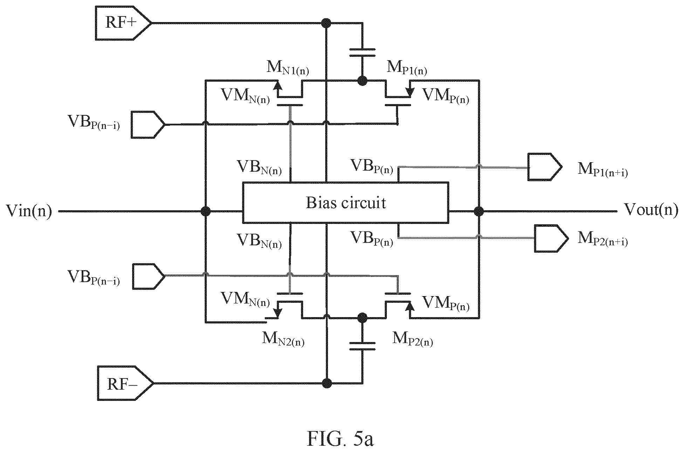

For example, FIG. 5a is a schematic diagram of a structure of a rectification circuit according to an embodiment of this application. As shown in FIG. 5a, when i is not equal to 0, and j is equal to 0, it indicates that a gate of $M_{P1(n)}$ in the $n^{th}$ rectification unit is driven by one $VB_{P(n-i)}$ generated by a bias circuit in the $(n-i)^{th}$ rectification unit, and a gate of $M_{P2(n)}$ in the $n^{th}$ rectification unit is driven by another $VB_{P(n-1)}$ generated by the bias circuit in the $(n-i)^{th}$ rectification unit. A gate of $M_{N1(n)}$ in the $n^{th}$ rectification unit is driven by one $VB_{N(n)}$ generated by the bias circuit in the $n^{th}$ rectification unit, and a gate of $M_{N2(n)}$ in the $n^{th}$ rectification unit is driven by another $VB_{N(n)}$ generated by the bias circuit in the $n^{th}$ rectification unit. Similarly, one $VB_{P(n)}$ generated by the bias circuit in the $n^{th}$ rectification unit is used to drive $M_{P1(n+i)}$ in the $(n+i)^{th}$ rectification unit, and another $VB_{P(n)}$ generated by the bias circuit in the $n^{th}$ rectification unit is used to drive $M_{P2(n+i)}$ in the $(n+i)^{th}$ rectification unit. One $VB_{N(n)}$ generated by the bias circuit in the $n^{th}$ rectification unit is used to drive $M_{N1(n)}$ in the $n^{th}$ rectification unit, and another $VB_{N(n)}$ generated by the bias circuit in the $n^{th}$ rectification unit is used to drive $M_{N2(n)}$ in the $n^{th}$ rectification unit.

That is, a node at which the bias circuit in the $n^{th}$ rectification unit generates the bias voltage $VB_{P(n)}$ is not directly connected to a gate of a PMOS transistor in a main path of a rectifier in the $n^{th}$ rectification unit, but is connected to a gate of a PMOS transistor in a main path of a rectifier in the $(n+i)^{th}$ rectification unit (or may also be understood as that the node is connected to a gate of a PMOS transistor in a main path of one rectifier in a self-bias rectifier module in the $(n+i)^{th}$ rectification unit, and input ends RF+ and RF- of the rectifier are consistent with those of a rectifier in the $n^{th}$ rectification unit). A node on which the bias circuit in the $n^{th}$ rectification unit generates the bias voltage $VB_{N(n)}$ is directly connected to a gate of an NMOS transistor in a main path of a rectifier in the $n^{th}$ rectification unit.

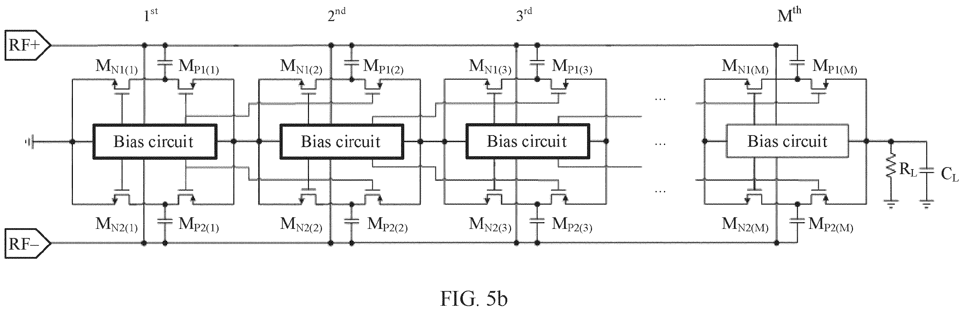

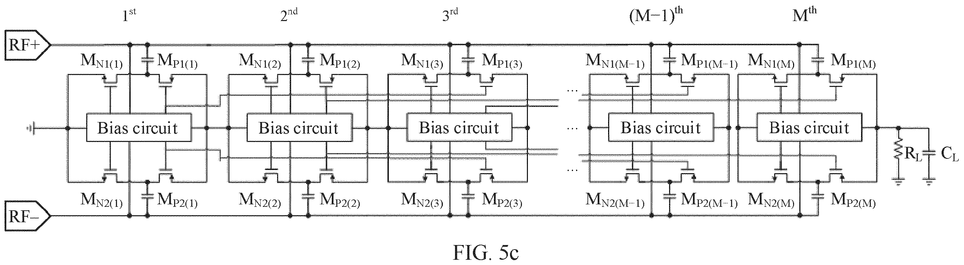

For example, when i is equal to 1, FIG. 5b is a schematic diagram of a structure of another rectification circuit according to an embodiment of this application. For example, when i is equal to 2, FIG. 5c is a schematic diagram of a structure of still another rectification circuit according to an embodiment of this application. The rectification circuit shown in this embodiment of this application may be further understood as a circuit in which multi-module collaborative rectifiers are cross-connected in a staggered manner, a rectification circuit in a backward connection mode, or the like. A specific name of the rectification circuit is not limited in this embodiment of this application. It may be understood that a case in which i is equal to 1 in FIG. 5b and a case in which i is equal to 2 in FIG. 5c are merely examples, and i may alternatively be another value. Correspondingly, the rectification circuit may alternatively have another form or deformation. Examples are not enumerated herein.

For example, when i is not equal to 0, two bias voltages $VB_{P(n)}$ generated by the bias circuit in the $n^{th}$ rectification unit are used to drive $M_{P1(n+i)}$ and $M_{P2(n+i)}$ in an $(n+i)^{th}$ rectification unit. It indicates that the bias voltages start to drive $M_{P1(n+i)}$ and $M_{P2(n+i)}$ from a gate of a PMOS transistor in the $(n+i)^{th}$ rectification unit. Therefore, driving manners of a gate of a PMOS transistor in a $1^{st}$ rectification unit to a gate of a PMOS transistor in an $i^{th}$ rectification unit are not determined. For example, when i is equal to 2, one $VB_{P(1)}$ generated by a bias circuit in a $1^{st}$ rectification unit is used to drive $M_{P1(3)}$ and $M_{P2(3)}$ in a $3^{rd}$ rectification unit, and one $VB_{P(2)}$ generated by a bias circuit in a $2^{nd}$ rectification unit is used to drive $M_{P1(4)}$, the $M_{P2(4)}$, and the like in a $4^{th}$ rectification unit. That is, driving manners of $M_{P1(1)}$ and $M_{P2(1)}$ in the $1^{st}$ rectification unit and driving manners of $M_{P1(1)}$ and $M_{P2(1)}$ in the $2^{nd}$ rectification unit are not determined. Therefore, embodiments of this application further have the following implementations.

Optionally, a gate of a PMOS transistor in each of first i rectification units is driven by a first voltage generated by a bias circuit in each of the rectification units. For example, a gate voltage of a PMOS transistor in a $1^{st}$ rectification unit is driven by a first voltage generated by a bias circuit in the $1^{st}$ rectification unit. A gate voltage of a PMOS transistor in an $i^{th}$ rectification unit is driven by a first voltage generated by a bias circuit in the $i^{th}$ rectification unit.

Optionally, gate voltages of PMOS transistors in first i rectification units are provided by a bias circuit in a $1^{st}$ rectification unit. It may be understood that driving manners of gate voltages of PMOS transistors in first i rectification units shown herein are merely examples. For example, the gate voltages of the PMOS transistors may be provided by a bias circuit in a $2^{nd}$ rectification unit. This is not limited in this embodiment of this application.

For example, in FIG. 5a, gate voltages of $M_{P1(n)}$ and $M_{P2(n)}$ in the $n^{th}$ rectification unit are driven by the bias voltage $VB_{P(n-1)}$ generated by the bias circuit in the $(n-i)^{th}$ rectification unit. Therefore, a bias voltage quantity $V_{Z(n-i)}$ at the node Z in the $(n-i)^{th}$ rectification unit and a gate voltage $VM_{P(n)}$ of a PMOS transistor in the $n^{th}$ rectification unit satisfy a formula (12):

$$VM_{p(n)} = \frac{n-i}{M} V_{out} + V_{Z(n-i)} \quad (12).$$

Optionally, a gate voltage of a PMOS transistor in each of first i rectification units is driven by a bias voltage generated by a bias circuit in each of the rectification units. A bias voltage quantity of a gate voltage of a rectifying PMOS transistor of a rectifier in a $p^{th}$ stage ($p \leq i$) rectification unit satisfies the following formula (13):

$$VM_{P(p)} = V_{Z(p)} \quad (13).$$

Optionally, gate voltages of PMOS transistors in first i rectification units are driven by a bias voltage generated by a bias circuit in a $1^{st}$ rectification unit. A bias voltage quantity of a gate voltage of a rectifying PMOS transistor of a rectifier in a $p^{th}$ stage ($p \leq i$) rectification unit satisfies the following formula (14):

$$VM_{P(p)} = V_{Z(1)} \quad (14).$$

It may be understood that the foregoing $V_{Z(P)}$ may also be understood as $VB_{P(p)}$, and the foregoing $V_{Z(1)}$ may also be understood as $VB_{P(1)}$.

Because a bias voltage $V_{XN(n)}$ generated by the bias circuit in the $n^{th}$ rectification unit is used to drive a gate of an NMOS transistor in a main path of a rectifier in the same rectification unit, a bias voltage quantity at the node X in the $n^{th}$ rectification unit and a gate voltage of the NMOS transistor in the $n^{th}$ rectification unit satisfy a formula (15):

$$VB_{n(n)} = V_{X(n)} \quad (15).$$

For example, the rectification circuits shown in FIG. 5a to FIG. 5c have high energy conversion efficiency in a range of input power -13 dBm to -11 dBm, and have extremely high sensitivity when input power is low.

Third implementation: i is equal to 0, and j is not equal to 0.

When i is equal to 0, and j is not equal to 0, the first voltage generated by the bias circuit in the $n^{th}$ rectification unit is used to drive a control end of a first switch transistor in the $n^{th}$ rectification unit, and the second voltage generated by the bias circuit in the $n^{th}$ rectification unit is used to drive a control end of a second switch transistor in an $(n-j)^{th}$ rectification unit. Similarly, a control end of a second switch transistor in the $n^{th}$ rectification unit is driven by a second voltage generated by a bias circuit in an $(n+j)^{th}$ rectification unit.

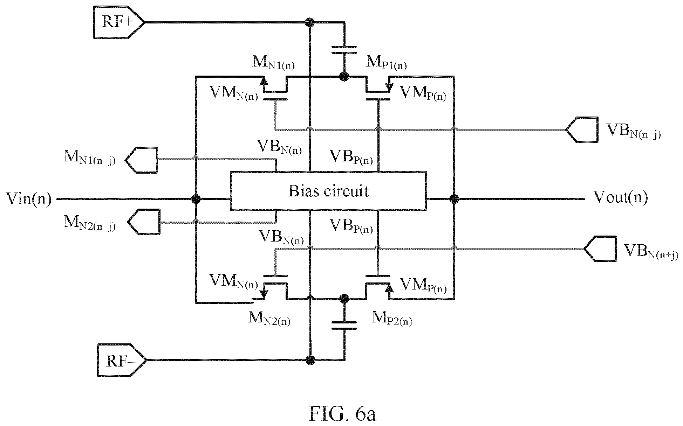

For example, FIG. 6a is a schematic diagram of a structure of a rectification circuit according to an embodiment of this application. As shown in FIG. 6a, when i is equal to 0, and j is not equal to 0, it indicates that a gate of $M_{P1(n)}$ in the $n^{th}$ rectification unit is driven by one $VB_{P(n)}$ generated by the bias circuit in the $n^{th}$ rectification unit, and a gate of $M_{P2(n)}$ in the $n^{th}$ rectification unit is driven by another $VB_{P(n)}$ generated by the bias circuit in the $n^{th}$ rectification unit. A gate of $M_{N1(n)}$ in the $n^{th}$ rectification unit is driven by one $VB_{N(n+j)}$ generated by a bias circuit in an $(n+j)^{th}$ rectification unit, and a gate of $M_{N2(n)}$ in the $n^{th}$ rectification unit is driven by another $VB_{N(n+j)}$ generated by the bias circuit in the $(n+j)^{th}$ rectification unit. Similarly, one $VB_{N(n)}$ generated by the bias circuit in the $n^{th}$ rectification unit is used to drive $M_{N1(n-j)}$ in an $(n-j)^{th}$ rectification unit, and another $VB_{N(n)}$ generated by the bias circuit in the $n^{th}$ rectification unit is used to drive $M_{N2(n-j)}$ in the $(n-j)^{th}$ rectification unit.

That is, a node at which the bias voltage $VB_{P(n)}$ generated by the bias circuit in the $n^{th}$ rectification unit is directly connected to a gate of a PMOS transistor in a main path of a rectifier in the $n^{th}$ rectification unit, and a node at which the bias voltage $VB_{N(n)}$ generated by the bias circuit in the $n^{th}$ rectification unit is not directly connected to a gate of an NMOS transistor in a main path of a rectifier in the $n^{th}$ rectification unit, but is connected to a gate of an NMOS transistor in a main path of a rectifier in the $(n-j)^{th}$ rectification unit (or may also be understood as that the node is connected to a gate of a PMOS transistor in a main path of one rectifier in a self-bias rectifier module in the $(n-j)^{th}$ rectification unit, and input ends RF+ and RF- of the rectifier are consistent with those of a rectifier in the $n^{th}$ rectification unit).

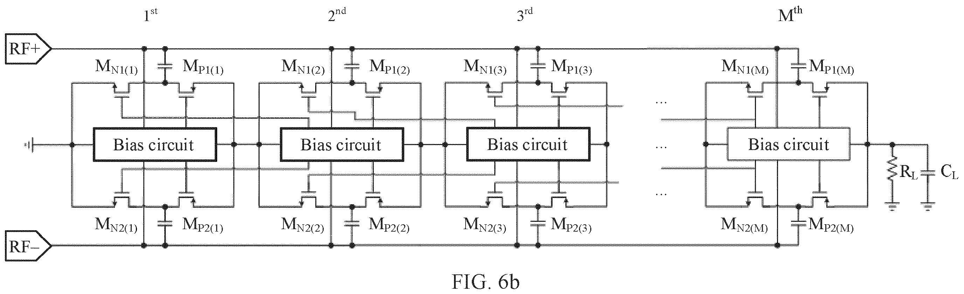

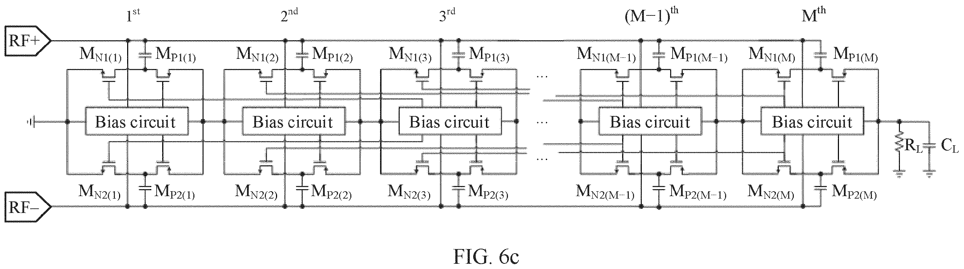

For example, when i is equal to 1, FIG. 6b is a schematic diagram of a structure of another rectification circuit according to an embodiment of this application. For example, when i is equal to 2, FIG. 6c is a schematic diagram of a structure of still another rectification circuit according to an embodiment of this application. The rectification circuit shown in this embodiment of this application may be further understood as a circuit in which multi-module collaborative rectifiers are cross-connected in a staggered manner, a rectification circuit in a forward connection mode, or the like. A specific name of the rectification circuit is not limited in this embodiment of this application. It may be understood that a case in which i is equal to 1 in FIG. 6b and a case in which i is equal to 2 in FIG. 6c are merely examples, and i may alternatively be another value. Correspondingly, the rectification circuit may alternatively have another form or deformation. Examples are not enumerated herein.

For example, when j is not equal to 0, one $VB_{N(n)}$ generated by a bias circuit in an $M^{th}$ rectification unit is used to drive a gate of an NMOS transistor in an $(M-j)^{th}$ rectification unit. It indicates that driving manners of gates of NMOS transistors of last j rectification units starting from an $(M-j+1)^{th}$ rectification unit to the $M^{th}$ rectification units are not determined. For example, when j is equal to 2, one $VB_{N(M-1)}$ generated by a bias circuit in an $(M-1)^{th}$ rectification unit is used to drive $M_{N1(M-3)}$ and $M_{N2(M-3)}$ in an $(M-3)^{th}$ rectification unit, and one $VB_{N(M)}$ generated by a bias circuit in an $M^{th}$ rectification unit is used to drive $M_{N1(M-2)}$ and $M_{N2(M-2)}$ in an $(M-2)^{th}$ rectification unit. That is, driving manners of $M_{N1(M-1)}$ and $M_{N2(M-1)}$ in the $(M-1)^{th}$ rectification unit and driving manners of $M_{N1(M)}$ and $M_{N2(M)}$ in the $M^{th}$ rectification unit are not determined. Therefore, embodiments of this application further have the following implementations.

Optionally, a gate of an NMOS transistor in each of last j rectification units is driven by a second voltage generated by a bias circuit in each of the rectification units. For example, a gate voltage of an NMOS transistor in a 1st rectification unit is driven by a second voltage generated by a bias circuit in the 1st rectification unit. A gate voltage of an NMOS transistor in a jth rectification unit is driven by a second voltage generated by a bias circuit in the jth rectification unit.

Optionally, gate voltages of NMOS transistors in last j rectification units are provided by a bias circuit in an Mth rectification unit. It may be understood that driving manners of gate voltages of NMOS transistors in last j rectification units shown herein are merely examples. For example, the gate voltages of the PMOS transistors may be provided by a bias circuit in an (M-1)th rectification unit. This is not limited in this embodiment of this application.

It may be understood that for a specific description of the third implementation, refer to the second implementation, the fourth implementation, or the like. Details are not described herein again.

Fourth implementation: i is not equal to 0, and j is not equal to 0.

In this implementation, i may be equal to j, or i may not be equal to j. For example, i is equal to j, and is equal to 1. For another example, i is equal to 2, and j is equal to 1. For another example, i is equal to 1, and j is equal to 2. For another example, i is equal to j, and is equal to 2. Examples are not enumerated herein.

It may be understood that, for a specific description of the rectification circuit when i is not equal to 0 and j is not equal to 0, refer to FIG. 3a to FIG. 3c, FIG. 5a to FIG. 5c, FIG. 6a to FIG. 6c, and the like. Details are not described one by one herein again. For example, when i is not equal to 0 and j is not equal to 0, a gate of a PMOS transistor in each of first i rectification units is driven by a first voltage generated by a bias circuit in each of the rectification units, and gates of NMOS transistors in first i rectification units, for example, a gate of an NMOS transistor in an ith rectification unit, is driven by a second voltage generated by a bias circuit in an (n+j)th rectification unit. A gate of an NMOS transistor in each of last j rectification units is driven by a second voltage generated by a bias circuit in each of the rectification units, and gates of PMOS transistors in last j rectification units, for example, a gate of an NMOS transistor in a jth rectification unit, is driven by a first voltage generated by a bias circuit in an (n-i)th rectification unit. A first voltage generated by a bias circuit in another rectification unit does not directly drive a gate of a PMOS transistor in a main path of a rectifier in the rectification unit, but drives a gate of a PMOS transistor in a main path of one rectifier that is in a self-bias rectifier module in an (n+i)th rectification unit and whose input ends RF+ and RF- are consistent with those of a rectifier in the nth rectification unit. A second voltage generated by a bias circuit in another rectification unit does not directly drive a gate of an NMOS transistor in a main path of a rectifier in the rectification unit, but drives a gate of an NMOS transistor in a main path of one rectifier that is in a self-bias rectifier module in an (n-j)th rectification unit and whose input ends RF+ and RF- are consistent with those of a rectifier in the nth rectification unit.

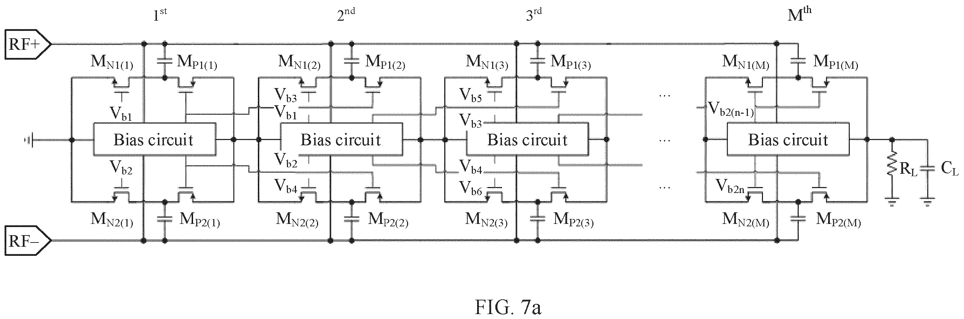

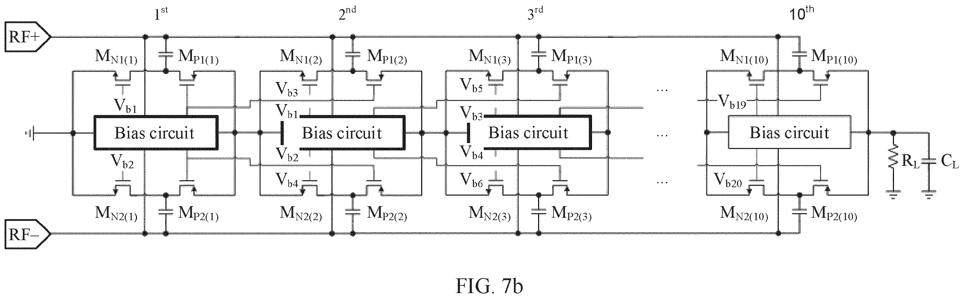

For example, when i is equal to j, and is equal to 1, FIG. 7a is a schematic diagram of a structure of a rectification circuit according to an embodiment of this application. FIG. 7b is a schematic diagram of a structure of a rectification circuit when i is equal to j and is equal to 1, and M is equal to 6. For brevity of FIG. 7a and FIG. 7b, connections between NMOS transistors and bias circuits in rectification circuits shown in FIG. 7a and FIG. 7b are not directly shown, but a connection relationship is represented by using a same letter. For example, in FIG. 7a, $V_{b1}$ shown in a 1st rectification unit and $V_{b1}$ shown in a 2nd rectification unit indicate that there is a connection relationship between two nodes. For example, in FIG. 7a, $V_{b3}$ shown in a 2nd rectification unit and $V_{b3}$ shown in a 3rd rectification unit indicate that there is a connection relationship between two nodes. For example, $V_{b2}$ shown in a 1st rectification unit and $V_{b2}$ shown in a 2nd rectification unit indicate that there is a connection relationship between two nodes. Examples are not enumerated herein.

It may be understood that the rectification circuit shown in this embodiment of this application may be further understood as a circuit in which multi-module collaborative rectifiers are cross-connected in a staggered manner, a rectification circuit in a cross connection mode, or the like. A specific name of the rectification circuit is not limited in this embodiment of this application.

For example, when i is not equal to 0, and j is not equal to 0, gate voltages of $M_{P1(n)}$ and $M_{P2(n)}$ in the nth rectification unit are driven by a bias voltage $VB_{P(n-i)}$ generated by a bias circuit in an (n-i)th rectification unit, and n is greater than i. Therefore, a bias voltage quantity $V_{Z(n-i)}$ at a node Z in the (n-i)th rectification unit and a gate voltage $VM_{P(n)}$ of a PMOS transistor in the nth rectification unit satisfy a formula (16):

$$VM_{P(n)} = \frac{n-i}{M} V_{out} + V_{Z(n-i)} \quad (16).$$

For example, when i is not equal to 0, and j is not equal to 0, gate voltages of $M_{N1(n)}$ and $M_{N2(n)}$ in the nth rectification unit are driven by a bias voltage $VB_{N(n+j)}$ generated by a bias circuit in an (n+j)th rectification unit. Therefore, a bias voltage quantity at a node X in the (n+j)th rectification unit and a gate voltage of an NMOS transistor in the nth rectification unit satisfy a formula (17):

$$VM_{N(n)} = \frac{n+j}{M}V_{out} + V_{X(n+j)} \quad (17).$$

Optionally, a gate voltage of a rectifying PMOS transistor in each of first i rectification units is provided by a bias circuit in each of the rectification units. A bias voltage of a gate voltage of a rectifying PMOS transistor in a $p^{th}$ stage ($p \leq i$) rectifier satisfies the following formula (18):

$$VM_{P(p)} = V_{X(p)} \quad (18).$$

A gate voltage of a rectifying NMOS transistor in each of last j rectification units is provided by a bias circuit in each of the rectification units. A bias voltage quantity of a gate voltage of a rectifying PMOS transistor in a $p^{th}$ stage ($q \geq M-j$) rectifier satisfies the following formula (19):

$$VB_{N(q)} = V_{X(q)} \quad (19).$$

Optionally, gate voltages of rectifying PMOS transistors in first i rectification units are provided by a bias circuit in a $1^{st}$ rectification unit. A bias voltage of a gate voltage of a rectifying PMOS transistor in a $p^{th}$ stage ($p \leq i$) rectifier satisfies the following formula (20):

$$VM_{P(p)} = V_{X(1)} \quad (20).$$

Gate voltages of rectifying NMOS transistors in last j rectification units are provided by a bias circuit in a last rectification unit. A bias voltage quantity of a gate voltage of a rectifying PMOS transistor in a $p^{th}$ stage ($q \geq M-j$) rectifier satisfies the following formula (21):

$$VB_{N(q)} = V_{X(M)} \quad (21).$$

For example, the rectification circuits shown in FIG. 7a to FIG. 7b have high energy conversion efficiency in a range of input power -12 dBm to -15 dBm, and have extremely high sensitivity when input power is low.

It may be understood that, in the foregoing implementations, for a part not described in detail in one implementation, refer to another implementation.

According to rectification circuits provided in embodiments of this application, isolation between different modules and independence of each module are fully utilized, to increase a gate voltage of a rectifier in each rectification unit, and further improve a voltage of the rectifier and energy obtaining efficiency in a radio frequency rectification circuit.

Energy conversion efficiency and sensitivity of rectification circuits shown in FIG. 1 and FIG. 2a are rapidly reduced at low input power, thereby causing a sensor to fail in an extremely harsh environment. However, rectification circuits shown in FIG. 3a to FIG. 7b improves operating performance of the rectification circuits in extreme cases without greatly modifying a cascade structure of a rectifier.

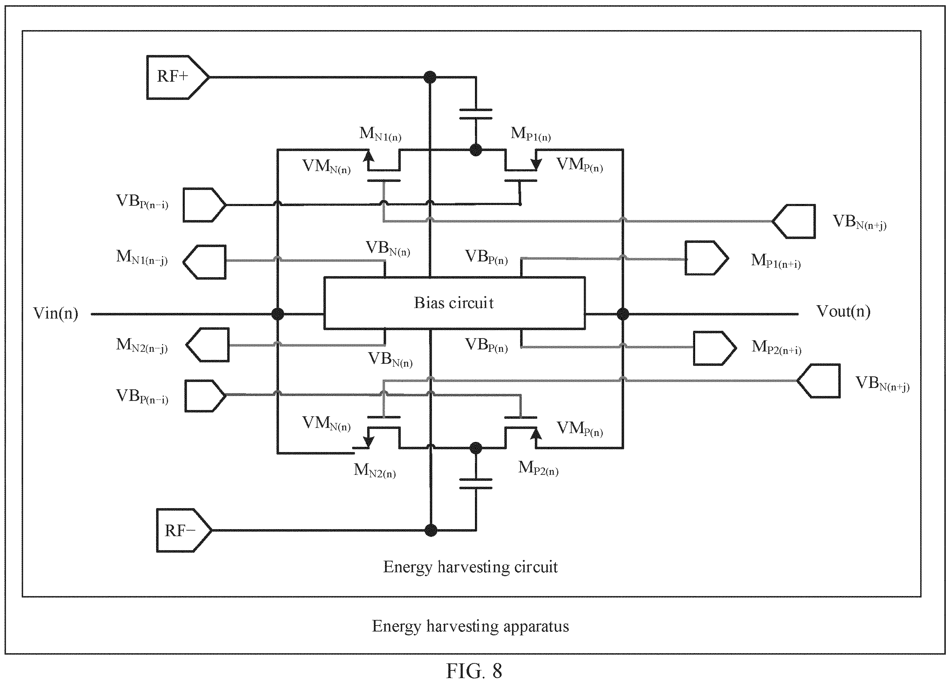

FIG. 8 is a schematic diagram of a structure of a rectification apparatus according to an embodiment of this application. The rectification apparatus includes a rectification circuit. For a specific description of the rectification apparatus, refer to the description of the rectification circuit. Details are not exhaustively described herein. It may be understood that another component included in the rectification apparatus is not limited in this embodiment of this application.

For example, the rectification apparatus is a chip, an electronic device, an Internet of things device, or the like. Examples are not enumerated in this embodiment of this application. For example, the chip includes an ID card, a membership card, electronic toll collection (electronic toll collection, ETC), a bus card, an access card, and the like. For another example, the rectification apparatus is a temperature sensor, a humidity sensor, or a medical sensor. Examples are not enumerated herein.

According to the rectification circuit shown above, an embodiment of this application further provides a rectification method. The rectification method may be implemented by using the rectification circuit shown above. The rectification method includes:

When a first switch transistor in an $n^{th}$ rectification unit is turned on, a first voltage generated by a bias circuit in an $(n-i)^{th}$ rectification unit is used to decrease a gate voltage of the first switch transistor, so that a gate-source voltage of the first switch transistor in the n<sup>th</sup> rectification unit is reduced; and

when a second switch transistor in the n<sup>th</sup> rectification unit is turned on, a second voltage generated by a bias circuit in an (n+j)<sup>th</sup> rectification unit is used to increase a gate voltage of the second switch transistor, so that a gate-source voltage of the second switch transistor in the n<sup>th</sup> rectification unit is increased.

It may be understood that the first voltage generated by the bias circuit in the (n-i)<sup>th</sup> rectification unit is used to drive a gate of the first switch transistor in the n<sup>th</sup> rectification unit. It indicates that the bias circuit in the (n-i)<sup>th</sup> rectification unit provides a proper direct current bias to the gate of the first switch transistor in the n<sup>th</sup> rectification unit, so that an overdrive voltage of the first switch transistor is larger. In this way, a forward turn-on current of the first switch transistor may be larger, and a quantity of charges transported per unit time may be larger. Therefore, energy conversion efficiency can be effectively improved.

It may be understood that the second voltage generated by the bias circuit in the (n+j)<sup>th</sup> rectification unit is used to drive a gate of the second switch transistor in the n<sup>th</sup> rectification unit. It indicates that the bias circuit in the (n+j)<sup>th</sup> rectification unit provides a proper direct current bias to the gate of the second switch transistor in the n<sup>th</sup> rectification unit, so that an overdrive voltage of the second switch transistor is larger. In this way, a forward turn-on current of the second switch transistor may be larger, and a quantity of charges transported per unit time may be larger. Therefore, energy conversion efficiency can be effectively improved.

It may be understood that the foregoing rectification method is described by using an example in which the first switch transistor includes a PMOS transistor. The bias circuit may be configured to reduce a gate voltage of the PMOS transistor, and may be configured to increase a gate voltage of an NMOS transistor.

An embodiment of this application further provides another rectification method, and the rectification method may be used in a rectification circuit. For a specific description of the rectification circuit, refer to the rectification circuit shown above. Details are not exhaustively described herein. As shown below, the rectification method includes:

When a first switch transistor in an nth rectification unit is turned on, a first voltage generated by a bias circuit in an (n-i)th rectification unit is used to increase a gate voltage of the first switch transistor, so that a gate-source voltage of the first switch transistor in the nth rectification unit is increased; and when a second switch transistor in the nth rectification unit is turned on, a second voltage generated by a bias circuit in an (n+j)th rectification unit is used to decrease a gate voltage of the second switch transistor, so that a gate-source voltage of the second switch transistor in the nth rectification unit is decreased.

For example, the first switch transistor includes an NMOS transistor, and the second switch transistor includes a PMOS transistor. According to the method provided in this embodiment of this application, a proper direct current bias may be given to gates of the first switch transistor and the second switch transistor, so that overdrive voltages of the first switch transistor and the second switch transistor are larger. In this way, forward turn-on currents of the first switch transistor and the second switch transistor are larger, and a quantity of charges transported per unit time are larger. Therefore, energy conversion efficiency can be effectively improved. For the description that the first switch transistor includes the NMOS transistor, refer to the foregoing description. Details are not described herein again.

It may be understood that for a specific description of the rectification method provided in this embodiment of this application, refer to the related description of the rectification circuit or the rectification apparatus shown above.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A rectification circuit, wherein the circuit comprises M rectification units, and M is an integer greater than or equal to 2;

an n<sup>th</sup> rectification unit comprises a first switch transistor, a second switch transistor, and a bias circuit, wherein the first switch transistor and the second switch transistor have different turn-on conditions, and n is an integer greater than or equal to 1 and less than or equal to M; and
a control end of the first switch transistor in the n<sup>th</sup> rectification unit is driven by a first voltage generated by a bias circuit in an (n-i)<sup>th</sup> rectification unit, and a control end of the second switch transistor in the n<sup>th</sup> rectification unit is driven by a second voltage generated by a bias circuit in an (n+j)<sup>th</sup> rectification unit, wherein i is an integer greater than or equal to 0, j is an integer greater than or equal to 0, n-i is greater than 0, and n+j is less than or equal to M.

2. The circuit according to claim 1, wherein a first voltage generated by the bias circuit in the n<sup>th</sup> rectification unit is used to drive a control end of a first switch transistor in an (n+i)<sup>th</sup> rectification unit, and a second voltage generated by the bias circuit in the $n^{th}$ rectification unit is used to drive a control end of a second switch transistor in an $(n-j)^{th}$ rectification unit, wherein n+i is less than or equal to M, and n-j is greater than 0.

3. The circuit according to claim 1 or 2, wherein i is equal to j, and is equal to 0.

4. The circuit according to claim 1 or 2, wherein i is not equal to 0, and j is equal to 0.

5. The circuit according to claim 4, wherein a control end of a first switch transistor in a $p^{th}$ rectification unit is driven by a first voltage generated by a bias circuit in a $1^{st}$ rectification unit, or a control end of a first switch transistor in a $p^{th}$ rectification unit is driven by a first voltage generated by a bias circuit in the $p^{th}$ rectification unit, wherein p is an integer greater than or equal to 1 and less than or equal to i.

6. The circuit according to claim 1 or 2, wherein i is equal to 0, and j is not equal to 0.

7. The circuit according to claim 6, wherein a control end of a second switch transistor in a $q^{th}$ rectification unit is driven by a second voltage generated by a bias circuit in an $M^{th}$ rectification unit, or a control end of a second switch transistor in a $q^{th}$ rectification unit is driven by a second voltage generated by a bias circuit in the $q^{th}$ rectification unit, wherein q is an integer greater than M-j and less than or equal to M.

8. The circuit according to claim 1 or 2, wherein i is not equal to 0, and j is not equal to 0.

9. The circuit according to any one of claims 1 to 8, wherein the first switch transistor comprises a P-type field effect transistor, and the second switch transistor comprises an N-type field effect transistor; or
the first switch transistor comprises an N-type field effect transistor, and the second switch transistor comprises a P-type field effect transistor.

10. The circuit according to claim 9, wherein the bias circuit is configured to reduce a gate voltage of the P-type field effect transistor, and/or is configured to increase a gate voltage of the N-type field effect transistor.

11. A rectification chip, comprising the rectification circuit according to any one of claims 1 to 10.

12. A rectification apparatus, comprising the rectification circuit according to any one of claims 1 to 10.

13. A rectification method, wherein the method is used in a rectification circuit, the rectification circuit comprises M rectification units, and M is an integer greater than or equal to 2; an $n^{th}$ rectification unit comprises a first switch transistor, a second switch transistor, and a bias circuit, the first switch transistor and the second switch transistor have different turn-on conditions, and n is an integer greater than or equal to 1 and less than or equal to M; a control end of the first switch transistor in the $n^{th}$ rectification unit is connected to a node at which a bias circuit in an $(n-i)^{th}$ rectification unit generates a first voltage, and a control end of the second switch transistor in the $n^{th}$ rectification unit is connected to a node at which a bias circuit in an $(n+j)^{th}$ rectification unit generates a second voltage, wherein i is an integer greater than or equal to 0, j is an integer greater than or equal to 0, n-i is greater than 0, and n+j is less than or equal to M; and method comprises:

when the first switch transistor in the $n^{th}$ rectification unit is turned on, the first voltage generated by the bias circuit in the $(n-i)^{th}$ rectification unit is used to decrease a gate voltage of the first switch transistor, so that a gate-source voltage of the first switch transistor in the $n^{th}$ rectification unit is reduced; and
when the second switch transistor in the $n^{th}$ rectification unit is turned on, the second voltage generated by the bias circuit in the $(n+j)^{th}$ rectification unit is used to increase a gate voltage of the second switch transistor, so that a gate-source voltage of the second switch transistor in the $n^{th}$ rectification unit is increased.

14. A rectification method, wherein the method is used in a rectification circuit, the rectification circuit comprises M rectification units, and M is an integer greater than or equal to 2; an $n^{th}$ rectification unit comprises a first switch transistor, a second switch transistor, and a bias circuit, the first switch transistor and the second switch transistor have different turn-on conditions, and n is an integer greater than or equal to 1 and less than or equal to M; a control end of the first switch transistor in the $n^{th}$ rectification unit is connected to a node at which a bias circuit in an $(n-i)^{th}$ rectification unit generates a first voltage, and a control end of the second switch transistor in the $n^{th}$ rectification unit is connected to a node at which a bias circuit in an $(n+j)^{th}$ rectification unit generates a second voltage, wherein i is an integer greater than or equal to 0, j is an integer greater than or equal to 0, n-i is greater than 0, and n+j is less than or equal to M; and method comprises:

when the first switch transistor in the $n^{th}$ rectification unit is turned on, the first voltage generated by the bias circuit in the $(n-i)^{th}$ rectification unit is used to increase a gate voltage of the first switch transistor, so that a gate-source voltage of the first switch transistor in the $n^{th}$ rectification unit is increased; and
when the second switch transistor in the $n^{th}$ rectification unit is turned on, the second voltage generated by the bias circuit in the $(n+j)^{th}$ rectification unit is used to decrease a gate voltage of the second switch transistor, so that a gate-source voltage of the second switch transistor in the $n^{th}$ rectification unit is decreased.

FIG. 1

FIG. 2a

FIG. 2b

FIG. 3a

FIG. 3b

FIG. 3c

FIG. 4a

FIG. 4b

EP 4 422 058 A1

FIG. 4c

FIG. 4d

EP 4 422 058 A1

FIG. 5a

FIG. 5b

FIG. 5c

EP 4 422 058 A1

FIG. 6a

FIG. 6b

FIG. 6c

FIG. 7a

FIG. 7b

FIG. 8

## INTERNATIONAL SEARCH REPORT

| International application No. |
|---|
| **PCT/CN2022/128547** |

**A.    CLASSIFICATION OF SUBJECT MATTER**

H02M 7/217(2006.01)i;  H02M 3/07(2006.01)i;  G06K 19/07(2006.01)i

According to International Patent Classification (IPC) or to both national classification and IPC

**B.    FIELDS SEARCHED**

Minimum documentation searched (classification system followed by classification symbols)

H02M

Documentation searched other than minimum documentation to the extent that such documents are included in the fields searched

Electronic data base consulted during the international search (name of data base and, where practicable, search terms used)

WPABSC; CNTXT; ENTXTC; CNKI; IEEE: 整流, 偏置, 电压, 第一, 第二, 射频, 单元, 模块, rectifier, bias, voltage, first, second, radio frequency, RF, unit, module

**C.    DOCUMENTS CONSIDERED TO BE RELEVANT**

| Category* | Citation of document, with indication, where appropriate, of the relevant passages | Relevant to claim No. |
|---|---|---|
| X | US 10713549 B1 (IMPINJ INC.) 14 July 2020 (2020-07-14) <br> description, column 8, line 42 to column 13, line 30, and figures 6-10 | 1-14 |
| X | CN 103138568 A (NATIONZ TECHNOLOGIES INC.) 05 June 2013 (2013-06-05) <br> description, paragraphs 23-56, and figures 1-8 | 1-14 |
| X | US 2005282505 A1 (TOSHIBA K. K.) 22 December 2005 (2005-12-22) <br> description, paragraphs 33-106, and figures 1-21 | 1-14 |
| A | CN 1963844 A (SHANGHAI QUANRAY ELECTRONICS CO., LTD.) 16 May 2007 (2007-05-16) <br> entire document | 1-14 |
| A | US 2010033999 A1 (SAMSUNG ELECTRO-MECHANICS CO., LTD.) 11 February 2010 (2010-02-11) <br> entire document | 1-14 |

☐ Further documents are listed in the continuation of Box C.        ☑ See patent family annex.

| *    Special categories of cited documents: | "T"    later document published after the international filing date or priority date and not in conflict with the application but cited to understand the principle or theory underlying the invention |
|---|---|
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **27 December 2022** | **20 January 2023** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/128547**

| Patent document cited in search report | | | Publication date (day/month/year) | Patent family member(s) | | | Publication date (day/month/year) |
|---|---|---|---|---|---|---|---|
| US | 10713549 | B1 | 14 July 2020 | None | | | |
| CN | 103138568 | A | 05 June 2013 | CN | 103138568 | B | 15 April 2015 |
| US | 2005282505 | A1 | 22 December 2005 | US | 2008318523 | A1 | 25 December 2008 |
| | | | | DE | 602005011679 | D1 | 22 January 2009 |
| | | | | EP | 1852804 | A2 | 07 November 2007 |
| | | | | EP | 1607900 | A2 | 21 December 2005 |
| | | | | US | 2008158926 | A1 | 03 July 2008 |
| | | | | JP | 2006034085 | A | 02 February 2006 |
| | | | | DE | 602005009284 | D1 | 09 October 2008 |
| | | | | US | 7424265 | B2 | 09 September 2008 |
| | | | | US | 7840181 | B2 | 23 November 2010 |
| | | | | US | 7890054 | B2 | 15 February 2011 |
| | | | | CN | 1722595 | A | 18 January 2006 |
| | | | | CN | 100466443 | C | 04 March 2009 |
| | | | | EP | 1607900 | A3 | 18 October 2006 |
| | | | | EP | 1607900 | B1 | 27 August 2008 |
| | | | | JP | 4519713 | B2 | 04 August 2010 |
| CN | 1963844 | A | 16 May 2007 | CN | 100458840 | C | 04 February 2009 |
| US | 2010033999 | A1 | 11 February 2010 | KR | 20100019129 | A | 18 February 2010 |
| | | | | KR | 100983123 | B1 | 17 September 2010 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111338911